# EUROPÄISCHE PATENTSCHRIFT

(11) **EP 1 268 597 B1**
(45) Veröffentlichungstag und Bekanntmachung des Hinweises auf die Patenterteilung: **29.06.2005**
(21) Anmeldenummer: 01900461.3
(22) Anmeldetag: 17.01.2001
(51) Int. Cl.: C08G 18/42, C09D 175/06

(54) **NEUE BINDEMITTELKOMBINATIONEN FÜR WETTERBESTÄNDIGE COIL COATING-BESCHICHTUNGEN**
NOVEL BONDING AGENT COMBINATION FOR WATER-PROOF COATINGS THAT ARE PRODUCED BY COIL COATING
NOUVELLES COMBINAISONS DE LIANTS POUR REVETEMENTS PRODUITS PAR ENDUCTION EN CONTINU DE BANDES, RESISTANTS AUX INTEMPERIES

(30) Priorität: 27.01.2000 DE 10003319
(43) Veröffentlichungstag der Anmeldung: 02.01.2003
(73) Patentinhaber: Bayer MaterialScience AG, 51368 Leverkusen (DE)
(72) Erfinder: WAMPRECHT, Christian, 41472 Neuss (DE); FÜSSEL, Christian, 47918 Tönisvorst (DE); NOBLE, Karl-Ludwig, 51467 Bergisch Gladbach (DE)
(86) Internationale Anmeldenummer: PCT/EP2001/000447
(87) Internationale Veröffentlichungsnummer: WO 2001/055239

(56) Entgegenhaltungen:
- EP-A- 0 005 033
- EP-A- 0 142 701
- WO-A-90/15090
- US-A- 5 739 204

## Beschreibung

Die vorliegende Erfindung betrifft ein neues flüssiges, lagerstabiles Beschichtungsmittel, welches sich zur Herstellung von hervorragend außenwitterungsbeständigen Beschichtungen eignet, und dessen Bindemittel sich aus einer Härterkomponente, bestehend aus einem Aminoplastharz und/oder einem blockierten Polyisocyanat und einer speziellen Polyolkomponente aus ausgewählten Bausteinen zusammensetzt sowie seine Verwendung zur Herstellung von witterungsbeständigen Beschichtungen auf beliebigen hitzeresistenten Substraten.

Einkomponenten-Einbrennlacke auf Basis von Polyisocyanaten mit blockierten Isocyanatgruppen sowie ihre Verwendung in Polyurethanlacken sind bekannt (vgl. z.B. Kunststoff-Handbuch, Band VII, Polyurethane, Carl Hanser-Verlag München (1966), Seiten 11-13, 21 ff.).

Für die Verwendung derartiger blockierter Polyisocyanate in Kombination mit Hydroxylpolyestern werden folgende Hauptanforderungen gestellt:
1) Niedrige Abspalttemperaturen bei möglichst kurzer Einbrenndauer.
2) Keine oder nur geringe Vergilbung beim Einbrennen und kurzzeitigen Überbrennen.
3) Ausreichende Lagerstabilität der Einkomponentenlacke.
4) Keine Abspaltung toxikologisch bedenklicher Spaltprodukte.

Diese Anforderungen können durch spezielle Einbrennbindemittel auf Basis von Hydroxylpolyestern und blockierten Polyisocyanaten erfüllt werden, wie sie in der DE-A 2 550 156 beschrieben sind. Der DE-A 3 046 409 ist zu entnehmen, dass die Einbrennbindemittel der DE-A 2 550 156 nicht zur Herstellung von Beschichtungen verwendet werden können, die Stoss- und Schlagbelastungen beim Schutz von Industriegütem wie z.B. Maschinenteilen, Fahrzeugkarosserien oder Transportbehältern im Oberflächenbereich ausgesetzt sind.

Obwohl die Einbrennbindemittel der DE-A 3 046 409 stoß- und schlagfeste Beschichtungen ergeben, können sie normalen Ansprüchen an die Wetterstabilität nicht genügen. Sie sind somit für die Beschichtung von Oberflächen, die extremen Witterungseinflüssen ausgesetzt sind, wie z.B. Automobilkarosserien, Fassadenelementen usw. und an die hohe Anforderungen an die mechanischen Eigenschaften und Belastbarkeit mit Lösemitteln, wie z.B. Benzin, gestellt werden, ungeeignet.

Aber auch Einkomponenten-Einbrennbindemittel auf Basis von Hydroxylpolyestern und Aminoplastharzen erfüllen die gestellten Anforderungen nach dem Einbrennprozess nur unzureichend bezüglich der Lösemittel- und Witterungsbeständigkeit, führen jedoch zu Lackfilmen, die sich durch ein günstiges Härie-/Elastizitäts-Verhältnis und gute Haftung auszeichnen. Solche Bindemittelkombinationen sind in der DE-A 2 621 657 beschrieben und können nach der Technik der automatischen Bandbeschichtung appliziert werden.

Der EP-A 494 442 ist zu entnehmen, dass die bisher oben beschriebenen Einbrennbindemittel nicht als Einbrennlacke für Einsatzzwecke geeignet sind, wo Beschichtungen gefordert werden, deren Bewitterungsverhalten so extrem hoch sein muss, dass die Lackfilme im pigmentierten Zustand auch kurzwelligem UV-Licht längere Zeit vergilbungs- und rissfrei bei hohen Glanzgraden der Lackfilmoberflächen standhalten müssen. Deutliche Verbesserungen bei der UV-Beständigkeit zeigen Einbrennlackierungen gemäß der EP-A 494 442, wobei Lackfilme erhalten werden, die nicht nur ein hohes Härte- und Elastizitätsniveau bei guter Haftung auf Metall und guter Abriebfestigkeit aufweisen, sondern darüber hinaus der Belastung mit kurzwelligem UV-Licht über einen längeren Zeitraum riss- und vergilbungsfrei ohne Zusatz von Lichtschutzmitteln standhalten.

In der Lackbranche ist allgemein bekannt, dass Prüfungen von Lackierungen mittels intensiver Belastung mit kurzwelligem UV-Licht nicht unbedingt geeignet sind, exakte Vorhersagen bezüglich der Witterungsbeständigkeit von Lacken in der Praxis zu treffen. Manchmal korrelieren solche Laborkurztests mit UV-Geräten nicht mit Langzeittests unter realistischen Praxisbedingungen (z.B. in Florida), so dass es vorkommen kann, dass Lacke, die in solchen Labortests gute Bewitterungsergebnisse zeigen, im Praxistest schlechter abschneiden, so auch Lacke gemäß der EP-A 494 442.

Von zunehmender Bedeutung ist jedoch der Einsatz von mittels der automatischen Bandbeschichtung lackierten Blechen in Bereichen, wo neben einer guten Lösemittel- und Chemikalienbeständigkeit auch eine ausgezeichnete Licht- und Wetterbeständigkeit über einen langjährigen Zeitraum gefordert wird, z.B. bei Fassaden. Auch wird hier bezüglich der mechanischen Eigenschaften, wie z.B. Härte, Elastizität und Abriebfestigkeit, ein hohes Eigenschaftsniveau verlangt.

Überraschenderweise wurde jetzt gefunden, dass die nachstehend näher beschriebenen Beschichtungsmittel auf Basis einer Härterkomponente der an sich bekannten Art und einer speziellen Polyesterkomponente Lackfilme ergeben, die nicht nur ein ausgewogenes Härte- und Elastizitätsverhältnis bei guter Haftung auf Metall und guter Abriebfestigkeit aufweisen, sondern darüber hinaus eine außergewöhnlich hohe, bisher nicht gekannte Außenwitterungsbeständigkeit solcher Lacksysteme im mehrjährigen Praxistest in Form von extrem hoher Glanzhaltung zeigen, obwohl Kurzbewitterungstests bei diesen Lacken unter Belastung mit UV-Licht schlechte Bewitterungseigenschaften vorhersagen.

Gegenstand der Erfindung ist ein bei Raumtemperatur lagerstabiles flüssiges Beschichtungsmittel, bestehend aus einem Bindemittelgemisch, organischen Lösungsmitteln und gegebenenfalls den aus der Lacktechnologie bekannten üblichen Hilfs- und Zusatzmitteln, wobei das Bindemittel ein Gemisch darstellt aus
A) 2,0 bis 30 Gew.-%, bezogen auf die Summe der Komponenten A) und B), einer Vernetzerkomponente, bestehend aus mindestens einem Aminoplastharz und/oder mindestens einem blockierten Polyisocyanat
   und
B) 98 bis 70 Gew.-%, bezogen auf die Summe der Komponenten A) und B), einer Polyesterkomponente, bestehend aus mindestens einem hydroxyl- und carboxylgruppenhaltigen Polyester, dadurch gekennzeichnet, dass die
Komponente B) ein mittleres, zahlengemitteltes Molekulargewicht Mn von 500 bis 10000 g/mol, eine Hydroxylzahl von 20 bis 50 mg KOH/g und eine Säurezahl von 0,5 bis 30 mg KOH/g aufweist und durch Polykondensation von
a) 50,5 bis 53 Mol-% einer Polyolkomponente, bestehend aus
   a1) 60 bis 80 Mol-% Neopentylglykol und/oder 1,4-Cyclohexandimethanol,
   a2) 20 bis 30 Mol-% Ethylenglykol, 1,2- und 1,3-Propandiol, 1,3- und 1,4-Butandiol und/oder 1,6-Hexandiol,
   a3) 0,1 bis 5 Mol-% Trimethylolpropan, Glycerin und/oder Pentaerythrit,
   a4) 0 bis 19,9 Mol-% anderen, von a1) bis a3) verschiedenen Alkoholen mit
b) 47 bis 49,5 Mol-% einer Polycarbonsäurekomponente, bestehend aus
   b1) 55 bis 75 Mol-% Isophthalsäure,
   b2) 10 bis 40 Mol-% Terephthalsäure und/oder Phthalsäure bzw. deren Anhydrid,
   b3) 0,1 bis 20 Mol-% Adipinsäure und
   b4) 0 bis 34,9 Mol-% anderen, von b1) bis b3) verschiedenen Carbonsäuren
hergestellt worden ist.

Gegenstand der Erfindung ist auch die Verwendung dieses Beschichtungsmittels zur Herstellung von unter dem Einfluss von Hitze aushärtbaren Beschichtungen auf beliebigen hitzeresistenten Substraten.

Die Bindemittel der erfindungsgemäßen Beschichtungszusammensetzung bestehen aus 2 bis 30, vorzugsweise 3 bis 25 Gew.-% einer Vemetzerkomponente A) und 98 bis 70, vorzugsweise 97 bis 75 Gew.-% einer Polyesterkomponente B), wobei sich die genannten Prozentsätze zu 100 ergänzen.

Die Vemetzerkomponente A) besteht aus mindestens einem Aminoplastharz und/oder mindestens einem blockierten Polyisocyanat.

Als Aminoplastharze sind beispielsweise Melamin-Formaldehyd- oder Harnstoff-Formaldehyd-Kondensationsprodukte anzusehen. Geeignete Melaminharze sind alle herkömmlichen nicht veretherten bzw. teilveretherten oder mit gesättigten Monoalkoholen mit 1 bis 4 C-Atomen veretherten Melamin-Formaldehyd-Kondensate, wie sie z.B. in der FR-A 943 411 oder bei D. H. Solomon, The Chemistry of Organic Film Formers, 235 - 240, John Wiley & Sons, Inc., New York, 1967, beschrieben sind. Die Melaminharze können jedoch auch ganz oder teilweise durch andere vernetzende Aminoplasten, wie sie z.B. in "Methoden der Organischen Chemie" (Houben-Weyl), Bd. 14/2, Teil 2, 4. Aufl. Georg Thieme Verlag, Stuttgart, 1963, 319 ff. beschrieben sind, ersetzt werden.

Als blockierte Polyisocyanate sind solche auf Basis aromatischer Polyisocyanate wegen der geforderten extremen Witterungsbeständigkeit der erfindungsgemäßen Lackierungen weniger bzw. nicht geeignet. Erfindungsgemäß kommen vielmehr solche blockierten Polyisocyanate in Betracht, die auf lichtechten, aliphatischen bzw. cycloaliphatischen Polyisocyanaten basieren, wie z.B. 1,6-Diisocyanatohexan, 1-Isocyanato-3,3,5-trimethyl-5-isocyanatomethylcyclohexan (Isophorondiisocyanat), 1,3- und 1,4-Cyclohexandiisocyanat, Tetramethylcyclohexan-1,3- und 1,4-diisocyanat, 4,4'-Diisocyanatodicyclohexylmethan, 2,4'-Diisocyanatodicyclohexylmethan usw. bzw. deren Gemische in Betracht. Aber auch daraus hergestellte chemische Modifizierungen mit vorzugsweise Biuret-, Allophanat-, Urethangruppen, Uretdion-, Isocyanurat- und/oder Iminooxadiazindionstrukturen können nach reversibler Blockierung der noch freien Isocyanatgruppen als Vemetzungskomponenten eingesetzt werden. Solche Isocyanuratgruppen aufweisende Basisverbindungen sind beispielsweise in den Patentschriften EP-A 0 003 505, DE-A 1101 394, US-A 3 358 010, US-A 3 903 127, US-A 4 324 879, US-A 4 288 586, DE-A 3 100 262, DE-A 3 100 263, DE-A 3 033 860 und DE-A 3 144 672 beschrieben.

Zur Herstellung der reversibel blockierten Polyisocyanatkomponente werden die Basisisocyanate oder Mischungen derselben vorzugsweise mit Blockierungsmitteln wie z.B. ε-Caprolactam, Acetonoxim, Butanonoxim, Cyclohexanonoxim, 3,5-Dimethylpyrazol, 1,2,4-Triazol, Malonsäurediethylester und Acetessigsäuredietbylester umgesetzt, so dass im Regelfall eine vollständige Blockierung der freien Isocyanatgruppen erreicht wird.

Die Blockierungsreaktion der freien Isocyanatgruppen mit ε-Caprolactam oder Butanonoxim erfolgt bei Temperaturen zwischen 100 bis 130°C, wie z.B. in der DE-A 3 004 876 beschrieben.

Dabei ist die Anwesenheit von Katalysatoren, z.B. Organozinnverbindungen oder bestimmte tertiäre Amine, wie z.B. Triethylamin, in Mengen zwischen 0,01 bis 0,1 Gew.-%, bezogen auf das Gesamtgewicht, vorteilhaft.

Die Blockierungsreaktion mit Malonestern bzw. Acetessigsäureestern geschieht in an sich bekannter Weise (vgl. DE-A 2 342 603 oder 2 550 156) mit Hilfe basischer Katalysatoren, wie z.B. Natriumphenolat, Natriummethylat oder anderen Alkali-Alkoholaten. Auch andere organische Alkali-Verbindungen, wie z.B. Natriummalonat kommen in Betracht. Die Katalysatoren werden in einer Menge von 0,1 % bis 2 %, bezogen auf das Gesamtgewicht der Reaktionskomponenten, eingesetzt. Die Einsatzmenge an Dialkylmalonat sollte mindesten 1 Mol pro Isocyanatäquivalent betragen; es ist jedoch zweckmäßig, einen 5 bis 20 %igen Überschuss an Blockierungsmittel zu verwenden.

Grundsätzlich ist es auch möglich, ein der Definition A) entsprechendes, jedoch unblockiertes Polyisocyanat nur teilweise zu blockieren, so dass beispielsweise 40 bis 90 % der Isocyanatgruppen in blockierter Form vorliegen und anschließend das teilblockierte Polyisocyanat mit einem Polyol der als Komponente B) geeigneten Art umzusetzen. Die Herstellung der erfindungsgemäßen Kombinationen A) und B) kann analog hierzu, nicht nur wie nachstehend beschrieben durch Abmischen der Einzelkomponenten, sondern auch dergestalt erfolgen, dass man unblockierte Polyisocyanate oder Polyisocyanatgemische teilblockiert, so dass noch beispielsweise bis zu 30 % der Isocyanatgruppen in freier Form vorliegen, und anschließend eine solche Menge der als Komponente B) geeigneten Polyesterpolyole hinzufügt, dass nach der spontan ablaufenden Additionsreaktion zwischen den freien Isocyanatgruppen und einem Teil der Hydroxylgruppen des Polyesterpolyols ein Gemisch aus blockierten Polyisocyanaten und überschüssigem Polyesterpolyol B) vorliegt, für welches das Äquivalentverhältnis von blockierten Polyisocyanatgruppen zu Hydroxylgruppen innerhalb des erfindungswesentlichen Bereichs von 0,6 : 1 bis 2 : 1 liegt. In einem solchen Falle bestünde die Komponente A) aus besagtem Umsetzungsprodukt zwischen teilblockiertem Polyisocyanat und dem genannten Polyesterpolyol.

Die Blockierungsreaktion kann lösungsmittelfrei oder in Anwesenheit gegenüber Isocyanatgruppen inerter Lösungsmittel bzw. Lösungsmittelgemischen erfolgen. Als solche kommen beispielsweise in Betracht:
Ester, wie z.B. Ethylacetat, Butylacetat, Methoxypropylacetat, Methylglykolacetat, Ethylglykolacetat, Diethylenglykolmonomethyletheracetat, Bernsteinsäure-, Glutarsäure- und Adipinsäuredimethylester oder -diethylester; Ketone, wie z.B. Methylethylketon, Methylisobutylketon, Methylamylketon; Aromaten, wie z.B. Toluol und Xylol sowie die in der Lackchemie üblichen höhersiedenden Kohlenwasserstoffgemische.

Die vorgenannten Lösungsmittel können einzeln oder als Gemische zum Einsatz kommen. Anstelle von Lösungsmitteln ist es auch möglich, Weichmacher zu verwenden, wie z.B. handelsübliche Phosphorsäureester, Phthalsäureester oder Sulfonsäureester.

Blockierte Polyisocyanate, die erfindungsgemäß als Komponente A) eingesetzt werden können, sind z.B. in den DE-A 2 342 603, 2 436 872, 2 550 156, 2 612 783, 2 612 784 oder 2 612 785 beschrieben.

In den erfindungsgemäßen Beschichtungsmitteln können als Komponente A) auch Gemische von blockierten Polyisocyanaten und Aminoplastharzen verwendet werden.

Bei der Komponente B) der erfindungsgemäßen Beschichtungsmittel handelt es sich um Polyester eines mittels Gelpermeationschromatographie ermittelten mittleren zahlengemittelten Molekulargewichtes Mn (Kalibrierung Polystyrol) von 500 bis 10000, vorzugsweise 1000 bis 8000, besonders bevorzugt 2000 bis 6000 und ganz besonders bevorzugt 3000 bis 4500 bei einer Uneinheitlichkeit U = (Mw/Mn) -1 von < 5, vorzugsweise < 4 und besonders bevorzugt < 3, einer Hydroxylzahl von 20 bis 50, vorzugsweise 25 bis 46 und besonders bevorzugt 30 bis 42 mg KOH/g, sowie einer Säurezahl von 0,5 bis 30, vorzugsweise 0,5 bis 20 und besonders bevorzugt 0,5 bis 10 mg KOH/g, die durch Polykondensation von
a) 50,5 bis 53 Mol-% einer Polyolkomponente, bestehend aus:
   a1) 60 bis 80 Mol-% Neopentylglykol und/oder 1,4-Cyclohexandimethanol,
   a2) 20 bis 30 Mol-% Ethylenglykol, 1,2- und 1,3-Propandiol, 1,3- und 1,4-Butandiol und/oder 1,6-Hexandiol,
   a3) 0,1 bis 5 Mol-% Trimethylolpropan, Glycerin und/oder Pentaerythrit und
   a4) 0 bis 19,9 Mol-% anderen, von a1) bis a3) verschiedenen Alkoholen mit
b) 47 bis 49,5 Mol-% einer Polycarbonsäurekomponente, bestehend aus
   b1) 55 bis 75 Mol-% Isophthalsäure,
   b2) 10 bis 40 Mol-% Terephthalsäure und/oder Phthalsäure bzw. deren Anhydrid,
   b3) 0,1 bis 20 Mol-% Adipinsäure und
   b4) 0 bis 34,9 Mol-% anderen, von b1) bis b3) verschiedenen Carbonsäuren
hergestellt worden sind, wobei sich die Prozentangaben a) und b), a1) bis a4) sowie b1) bis b4) jeweils zu 100 ergänzen.

Veresterungsreaktionen lassen sich mit Hilfe von Katalysatoren stark beschleunigen. Daher sind die Polyester B) vorzugsweise Veresterungsprodukte aus:
a) 50,5 bis 52,5 Mol-% einer Polyolkomponente, bestehend aus
   a1) 62 bis 78 Mol-% Neopentylglykol und/oder 1,4-Cyclohexandimethanol,
   a2) 22 bis 30 Mol-% Ethylenglykol, 1,2- und 1,3-Propandiol, 1,3- und 1,4-Butandiol und/oder 1,6-Hexandiol,
   a3) 1 bis 4,5 Mol-% Trimethylolpropan, Glycerin und/oder Pentaerythrit und
   a4) 0 bis 15 Mol-% anderen, von a1) bis a3) verschiedenen Alkoholen mit
b) 47,5 bis 49,5 Mol-% einer Polycarbonsäurekomponente, bestehend aus
   b1) 57 bis 73 Mol-% Isophthalsäure,
   b2) 12 bis 38 Mol-% Terephthalsäure und/oder Phthalsäure bzw. deren Anhydrid,
   b3) 2 bis 18 Mol-% Adipinsäure und
   b4) 0 bis 29 Mol-% anderen, von b1) bis b3) verschiedenen Carbonsäuren,
die unter Verwendung von titan- und/oder zinnhaltigen Katalysatoren eines Molekulargewichtsbereichs von 166 bis 300 hergestellt worden sind, wobei sich die Prozentangaben a) und b), a1) bis a4) sowie b1) bis b4) jeweils zu 100 ergänzen.

Besonders bevorzugt sind die Polyester B) Veresterungsprodukte aus:
a) 50,5 bis 52 Mol-% einer Polyolkomponente, bestehend aus
   a1) 64 bis 76 Mol-% Neopentylglykol und/oder 1,4-Cyclohexandimethanol,
   a2) 24 bis 30 Mol-% Ethylenglykol, 1,2- und 1,3-Propandiol, 1,3- und 1,4-Butandiol und/oder 1,6-Hexandiol,
   a3) 2 bis 4,5 Mol-% Trimethylolpropan, Glycerin und/oder Pentaerythrit und
   a4) 0 bis 10 Mol-% anderen, von a1) bis a3) verschiedenen Alkoholen mit
b) 48 bis 49,5 Mol-% einer Polycarbonsäurekomponente, bestehend aus
   b1) 58 bis 72 Mol-% Isophthalsäure,
   b2) 14 bis 36 Mol-% Terephthalsäure und/oder Phthalsäure bzw. deren Anhydrid,
   b3) 4 bis 16 Mol-% Adipinsäure und
   b4) 0 bis 24 Mol-% anderen, von b1) bis b3) verschiedenen Carbonsäuren,
die unter Verwendung von zinnhaltigen Katalysatoren eines Molekulargewichtsbereichs von 166 bis 300 hergestellt worden sind, wobei sich die Prozentangaben a) und b), a1) bis a4) sowie b1) bis b4) jeweils zu 100 ergänzen.

Ganz besonders bevorzugt sind die Polyester B) Veresterungsprodukte aus:
a) 51 bis 52 Mol-% einer Polyolkomponente, bestehend aus
   a1) 66 bis 74 Mol-% Neopentylglykol,
   a2) 24 bis 28 Mol-% 1,6-Hexandiol,
   a3) 2,5 bis 4,5 Mol-% Trimethylolpropan und
   a4) 0 bis 7,5 Mol-% anderen, von a1) bis a3) verschiedenen Alkoholen mit
b) 48 bis 49 Mol-% einer Polycarbonsäurekomponente, bestehend aus
   b1) 60 bis 70 Mol-% Isophthalsäure,
   b2) 20 bis 30 Mol-% Phthalsäure bzw. deren Anhydrid,
   b3) 5 bis 15 Mol-% Adipinsäure und
   b4) 0 bis 15 Mol-% anderen, von b1) bis b3) verschiedenen Carbonsäuren,
die unter Verwendung von zinnhaltigen Katalysatoren eines Molekulargewichtsbereichs von 200 bis 250 hergestellt worden sind, wobei sich die Prozentangaben a) und b), a1) bis a4) sowie b1) bis b4) jeweils zu 100 ergänzen.

Die Herstellung der Polyester erfolgt in an sich bekannter Weise nach Methoden wie sie beispielsweise in "Ullmanns Encyclopädie der technischen Chemie", Verlag Chemie Weinheim, 4. Auflage (1980), Band 19, Seiten 61 ff. oder H. Wagner und H.F. Sarx, "Lackkunstharze", Carl Hanser Verlag, München (1971), Seiten 86 bis 152 ausführlich beschrieben sind.

Die Veresterung erfolgt in Gegenwart von titan- und/oder zinnhaltigen Katalysatoren des Molekulargewichtsbereich 166 bis 300, vorzugsweise 200 bis 250 bei Veresterungstemperaturen von 80 bis 260°C, vorzugsweise 120 bis 240°C und besonders bevorzugt 160 bis 220°C. Die Veresterungsreaktion wird so lange durchgeführt, bis die angestrebten Werte für die Hydroxyl- und Säurezahl erreicht sind. Die Polyesterpolyole werden nach der Kondensationsreaktion in geeigneten Lösungsmitteln, wie sie beispielsweise zuvor bei der Blockierung der Polyisocyanate beschrieben wurden, gelöst.

Zur Herstellung der in den erfindungsgemäßen Beschichtungsmitteln vorliegenden Bindemittelkombinationen unter ausschließlicher Verwendung von blockierten Polyisocyanaten als Komponente A) werden die Polyisocyanatkomponente A) und die Polyesterkomponente B) abgemischt, und zwar so, dass die Mengenverhältnisse einem Äquivalentverhältnis von blockierten Polyisocyanat- zu Hydroxylgruppen von 0,6 : 1 bis 2 : 1, vorzugsweise von 0,8 : 1 bis 1,5 : 1 und besonders bevorzugt 0,9 : 1 bis 1,3 : 1 entsprechen. Es ist darauf zu achten, dass beim Vermischen der Komponenten unterhalb der Temperatur gearbeitet wird, bei der die blockierten Isocyanatgruppen mit den Hydroxylgruppen reagieren können.

Wie bereits erwähnt können die erfindungsgemäßen Beschichtungsmittel neben diesen wesentlichen Bindemittelkomponenten A) und B) noch Hilfs- und Zusatzmittel bzw. weitere Bindemittelkomponenten enthalten. Hierzu gehören beispielsweise andere, nicht der Beschreibung von B) entsprechende, aus der Polyurethanlacktechnologie bekannte organische Polyhydroxylverbindungen wie beispielsweise die üblichen Polyester-, Polyether- oder vorzugsweise Polyacrylatpolyole, d.h. in Lacklösemitteln der auch erfindungsgemäß eingesetzten Art lösliche Copolymerisate von hydroxyfunktionellen ungesättigten Monomeren, wie z.B. Hydroxyethyl- und/oder Hydroxypropyl(meth)acrylat mit anderen olefinisch ungesättigten Monomeren, wie z.B. Methylmethacrylat, Styrol Acrylsäure, Butylacrylat, Acrylnitril oder Gemische derartiger Monomeren. Die Verwendung derartiger, nicht der Definition von B) entsprechender Polyhydroxylverbindungen erfolgt jedoch allenfalls, wenn überhaupt, in Mengen von bis zu 50 Hydroxyläquivalent-%, bezogen auf die Gesamtmenge der in den Beschichtungsmitteln vorliegenden, Hydroxylgruppen aufweisenden Verbindungen. Im Falle der Mitverwendung derartiger Polyhydroxylverbindungen muss selbstverständlich die Menge der Vemetzerkomponente A) innerhalb der oben angegebenen Grenzen entsprechend erhöht werden, insbesondere bei Mitverwendung von blockierten Polyisocyanaten als Komponente A) muss deren Menge so bemessen werden, dass das Äquivalentverhältnis von blockierten Polyisocyanaten zu Hydroxylgruppen bei mindestens 0,6 : 1 liegt. Die Mitverwendung der nicht der Definition von B) entsprechenden Polyole ist keineswegs bevorzugt.

Weitere Hilfs- und Zusatzmittel sind die üblichen Lösungsmittel eines mindestens bei 75°C liegenden Siedepunkts bzw. eines oberhalb 75°C liegenden Siedebereichs. Die obere Grenze des Siedepunkts bzw. Siedebereichs der zum Einsatz gelangenden Lösungsmittel ist von den jeweiligen Einbrennbedingungen abhängig. Je höher die Einbrenntemperatur ist, desto höher sollten auch die Siedetemperaturen der zu verwendenden Lösungsmittel liegen. Als Lösungsmittel kommen beispielsweise folgende in Frage: Aromatische Kohlenwasserstoffe, wie z.B. Toluol, Xylol, Tetralin, Cumol, sowie technische Gemische von Aromaten mit engen Siedeintervallen, z.B. Solvesso® 100, 150 und 200 der Fa. Esso; Ketone, wie z.B. Methylisobutylketon, Diisobutylketon, Isophoron, Cyclohexanon und Ester, wie z.B. Essigsäure-n-hexylester, Ethylglykolacetat, Ethylacetat, Butylacetat, Methoxypropylacetat, Bernsteinsäure-, Glutarsäure- und Adipinsäuredimethylester oder Gemische derartiger Lösungsmittel.

Die Lösungsmittel können entweder, wie bereits ausgeführt, bei der Herstellung der blockierten Polyisocyanate A), bei der Herstellung der Polyesterpolyole B) oder auch zu einem beliebigen späteren Zeitpunkt zugesetzt werden.

Weitere gegebenenfalls in den erfindungsgemäßen Beschichtungsmitteln vorliegende Hilfs- und Zusatzmittel sind beispielsweise Weichmacher der bereits beispielhaft genannten Art, Pigmente, Füllstoffe, Dispergierhilfsmittel, Verdicker, Verlaufshilfsmittel, Lichtschutzmittel, UV-Absorber oder die Vernetzungsreaktion beschleunigende Katalysatoren.

Die Aushärtung von Polyester/Aminoplast-Bindemitteln wird bekanntlich durch Säurezusatz beschleunigt. Bei Verwendung von Polyestern mit sehr niedrigen Säurezahlen können den erfindungsgemäßen Überzugsmitteln saure Katalysatoren zugesetzt werden. So wird z.B. die Aushärtung bei Zusatz von 0,5 Gew.-%, bezogen auf die Summe der Komponenten A) und B), p-Toluolsulfonsäure stark beschleunigt.

Es ist auch möglich, Polyestern mit niedriger Säurezahl etwa 1 bis 5 Gew.-%, bezogen auf Polyester, eines Anhydrids einer relativ sauren Dicarbonsäure, z.B. Maleinsäureanhydrid, zuzusetzen, um die Säurezahl nachträglich zu erhöhen und so auch ohne Zusatz weiterer saurer Katalysatoren die Einbrenntemperaturen zu senken, und/oder die Einbrennzeiten zu verkürzen.

Die erfindungsgemäßen Beschichtungsmittel stellen bei Raumtemperatur flüssige und lagerstabile Gemische dar und können wie zuvor beschrieben durch weitere Zusätze zu verarbeitbaren Lacken formuliert werden.

Zur Herstellung von Überzügen unter Verwendung von Lacken auf Basis der erfindungsgemäßen Beschichtungsmittel werden diese nach an sich bekannten Applikationsmethoden, beispielsweise durch Spritzen, Tauchen, Fluten oder mit Hilfe von Walzen oder Rakeln auf beliebige hitzeresistente Substrate ein- oder mehrschichtig aufgetragen. Die Lacke auf Basis der erfindungsgemäßen Beschichtungsmittel eignen sich zur Herstellung von Überzügen auf Metallen, Kunststoffen, Holz oder Glas. Besonders gut geeignet sind die Lacke auf Basis der erfindungsgemäßen Beschichtungsmittel zur Herstellung von Überzügen auf Aluminium und Stahlbändern, die nach dem automatischen Bandlackierverfahren beschichtet werden und als Fahrzeugkarosserien, Gehäuse für Maschinen und Haushaltsgeräte, Verkleidungsbleche, Fässer oder Container Verwendung finden. Die zu beschichtenden Substrate können vor der Beschichtung mit geeigneten Grundierungen versehen sein. Bei der erfindungsgemäßen Verwendung wird die Menge der eingesetzten erfindungsgemäßen Beschichtungsmittel im allgemeinen so bemessen, dass Trockenschichtdicken von ca. 5 bis 50 µm vorliegen. Es ist jedoch auch möglich, wesentlich dickere Schichten herzustellen.

Die Aushärtung der Lacke auf Basis der erfindungsgemäßen Beschichtungsmittel erfolgt je nach Anwendung in einem Temperaturbereich von 90 bis 500°C, vorzugsweise 110 bis 400°C und in einer Zeit von 45 bis 0,25 Minuten, vorzugsweise von 35 bis 0,50 Minuten. Die ausgehärteten Überzüge weisen hervorragende lacktechnische Eigenschaften auf, wobei insbesondere die außerordentlich gute Außenwitterungsbeständigkeit, vor allem auch unter speziellen klimatischen Bedingungen (z.B. Florida, USA) hervorzuheben ist.

Der erfindungsgemäß erreichbare Oberflächenschutz wird in den nachfolgenden Beispielen demonstriert. Alle Prozentangaben beziehen sich auf Gewichtsprozente.

### Beispiele

### Beispiel 1 (erfindungsgemäß)

345 g Ethylenglykol, 951 g Neopentylglykol, 648 g Hexandiol-1,6, 93 g Trimethylolpropan 732 g Phthalsäureanhydrid, und 0,45 g ®Fascat 4100¹⁾ werden in einen 5-1-Rührkessel, der mit einem Rührer, einer Destillationsbrücke mit Kolonne und mit einem Stickstoffeinleitungsrohr ausgerüstet ist, eingewogen und auf 125°C erwärmt. Während der Aufheizphase wird das einfache Kesselvolumen/h Stickstoff/h durchgeleitet. Bei 125°C werden 2016 g Isophthalsäure und 321 g Adipinsäure zugegeben, der Stickstoffstrom auf das doppelte Kesselvolumen gesteigert und unter einer Kopftemperaturbegrenzung von max. 105°C auf 220°C aufgeheizt. Dabei wird das Reaktionswasser größtenteils abgespalten, wobei gegen Ende eine Sumpftemperatur von 220°C erreicht wird. Es wird bei 220°C so lange kondensiert, bis eine Säurezahl von ≤ 3 mg KOH/g erreicht ist. Es resultieren ca. 4500 g eines Polykondensationsproduktes mit einer Säurezahl von 2 mg KOH/g und einer OH-Zahl von 35 mg KOH/g. Zu 2700 g dieses Harzes werden unter Rühren 1800 g eines Lösemittelgemischs aus 3 Teilen ®Solvesso 150²⁾ und 1 Teil DBE-Ester³⁾ gegeben. Es resultiert eine Lösung mit einem Feststoffgehalt von 60 Gew.-%, einer Säurezahl von 1,2 mg KOH/g und einer Viskosität von 3661 mPas, gemessen bei 23°C im Rotationsviskosimeter der Fa. Haake (Rotovisko RV 20).
¹⁾Elf Atochem Deutschland GmbH, Düsseldorf
²⁾Esso AG, Köln
³⁾Lemro GmbH, Grevenbroich

### Beispiel 2 (erfindungsgemäß)

Unter den Bedingungen gemäß Beispiel 1 werden 345 g Ethylenglykol, 1098 g Neopentylglykol, 486 g Hexandiol-1,6, 93 g Trimethylolpropan, 2025 g Isophthalsäure, 735 g Phthalsäureanhydrid und 321 g Adipinsäure unter Zuhilfenahme von 0,45 g ®Fascat 4100 polykondensiert. Die resultierende Harzlösung in ®Solvesso 150 /DBE-Ester (3:1) hat einen Feststoffgehalt von 60,6 %, eine Viskosität von 5648 mPas, eine Säurezahl von 0,8 mg KOH/g und eine OH-Zahl von 20,2 mg KOH/g.

### Beispiel 3 (erfindungsgemäß)

Unter den Bedingungen gemäß Beispiel 1 werden 1392 g Neopentylglykol, 588 g Hexandiol-1,6, 85 g Trimethylolpropan, 1857 g Isophthalsäure, 674 g Phthalsäureanhydrid und 294 g Adipinsäure unter Zuhilfenahme von 0,45 g ®Fascat 4100 polykondensiert, jedoch nur bis zu einer Säurezahl von ≤ 5 mg KOH/g. Die resultierende Harzlösung in ®Solvesso 100 hat einen Feststoffgehalt von 60,4 %, eine Viskosität von 1644 mPas, eine Säurezahl von 2,3 mg KOH/ g und eine OH-Zahl von 23 mg KOH/g.

### Beispiel 4 (erfindungsgemäß)

1671 g Neopentylglykol und 729 g Phthalsäureanhydrid werden in einem Reaktionskessel gemäß Beispiel 1 unter Durchleiten von 1 Kesselvolumen Stickstoff/h auf 150°C erhitzt und so lange bei 150°C gerührt, bis eine OH-Zahl von < 635 mg KOH/g erreicht ist. Danach werden 462 g Hexandiol-1,6, 87 g Trimethylolpropan, 1926 g Isophthalsäure, 306 g Adipinsäure und 0,45 g ®Fascat 4100 zugegeben und wie in Beispiel 1 beschrieben bis zu einer Säurezahl von ≤ 2 mg KOH/g polykondensiert. Es resultieren ca. 4500 g eines Polykondensationsproduktes mit einer Säurezahl von 1,3 mg KOH/g und einer OH-Zahl von 21,5 mg KOH/g. Zu 2700 g dieses Harzes werden unter Rühren 1800 g eines Lösemittelgemischs aus 3 Teilen ®Solvesso 150 und 1 Teil DBE-Ester. Es resultiert eine Lösung mit einem Feststoffgehalt von 62,4 Gew.-% und einer Viskosität von 8175 mPas.

### Beispiel 5 (erfindungsgemäß)

Unter den Bedingungen gemäß Beispiel 1 werden 1456 g Neopentylglykol, 615 g Hexandiol-1,6, 88 g Trimethylolpropan, 1917 g Isophthalsäure, 696 g Phthalsäureanhydrid und 303 g Adipinsäure unter Zuhilfenahme von 0,45 g ®Fascat 4100 polykondensiert. Die resultierende Harzlösung in ®Solvesso 150 / DBE-Ester (3:1) hat einen Feststoffgehalt von 59,5 %, eine Viskosität von 3000 mPas, eine Säurezahl von 1,1 mg KOH/g und eine OH-Zahl von 21 mg KOH/g.

### Beispiel 6 (erfindungsgemäß)

Ein Polykondensationsprodukt analog Beispiel 5 wird hergestellt, jedoch ohne Verwendung eines Katalysators. Es resultiert eine Harzlösung mit einem Feststoffgehalt von 59,3 %, einer Viskosität von 3140 mPas, einer Säurezahl von 1,2 mg KOH/g und einer OH-Zahl von 21 mg KOH/g. Die Kondensationszeit zur Erreichung der angestrebten Säurezahl ist dreimal länger als bei Beispiel 5.

### Beispiel 7 (Vergleich)

Unter den Bedingungen gemäß Beispiel 1 werden 88 g Propylenglykol, 1693 g Neopentylglykol, 425 g Trimethylolpropan, 1965 g Isophthalsäure und 1002 g Adipinsäure ohne Verwendung eines Katalysators bis zu einer Säurezahl von ≤ 5 mg KOH/g polykondensiert. Es resultieren ca. 4500 g eines Polykondensationsproduktes mit einer Säurezahl von 4,3 mg KOH/g und einer OH-Zahl von 130 mg KOH/g. Zu 2925 g dieses Harzes werden unter Rühren 1575 g eines Lösemittelgemischs aus 9 Teilen ®Solvesso 100⁴⁾ und 1 Teil Isobutanol gegeben. Es resultiert eine Lösung mit einem Feststoffgehalt von 65,4 Gew.-% und einer Viskosität von 2700 mPas.
⁴⁾Esso AG, Köln

### Beispiel 8 (Vergleich)

Unter den Bedingungen gemäß Beispiel 1 werden 351 g Ethylenglykol, 614 g Neopentylglykol, 964 g Hexandiol-1,6, 88 g Trimethylolpropan, 2215 g Isophthalsäure und 852 g Phthalsäureanhydrid ohne Verwendung eines Katalysators bis zu einer Säurezahl von ≤ 3 mg KOH/g polykondensiert. Die resultierende Harzlösung in ®Solvesso 150 / DBE-Ester (3:1) hat einen Feststoffgehalt von 59,6 %, eine Viskosität von 7700 mPas, eine Säurezahl von 1,8 mg KOH/g und eine OH-Zah1 von 16 mg KOH/g.

### Beispiel 9 (Verwendung)

Dieses Beispiel beschreibt die Herstellung gebrauchsfertiger Lacke auf Basis der Polyesterpolyole gemäß den Beispielen 1 bis 6 und den Vergleichsbeispielen 7 und 8, deren Applikation und die Prüfung der resultierenden Lackfilme.

Zur Beurteilung der allgemeinen Lackeigenschaften wurden Weißlacke hergestellt; dabei wurden die Polyesterpolyole aus den Beispielen 1 bis 6 und den Vergleichsbeispielen 7 und 8 mit verschiedenen Zusätzen sowie Weißpigment versehen. Anschließend wurde mit einem blockierten, lichtechten Lackpolyisocyanat versetzt, wobei ein NCO/OH-Verhältnis von ca. 1:1 eingehalten wurde. Als blockiertes Lackpolyisocyanat diente eine 75 %ige Lösung in ®Solvesso 100 eines durch Trimerisierung von Hexamethylendiisocyanat (HDI) hergestellten und mit Butanonoxim blockierten Isocyanuratgruppen aufweisenden Polyisocyanats mit einem NCO-Gehalt der Lösung von 11,1 %.

Bezogen auf Festharz (Summe der festen Anteile an Polyol und Polyisocyanat) wurden folgende Anteile an Zusatzstoffen verwendet:

**Tabelle 1**

| **Bestandteile** | **Gew.-% fest auf fest** |
|---|---|
| Dibutylzinndilaurat⁵⁾ als Katalysator, 10%ig in ®Solvesso 200 | 1,0 |
| ®Celluloseacetobutyrat CAB 531-1⁶⁾, 10%ig in ®Solvesso200/ Butyl-diglykol 2:1 | 2,4 |
| ®Acronal 4 F⁷⁾ als Verlaufsmittel, 50%ig in ®Solvesso 200 | 2,4 |

| | |
|---|---|
| ⁵⁾Oxydo GmbH, Emmerich | |
| ⁶⁾Krahn Chemie, Hamburg | |
| ⁷⁾BASF AG, Ludwigshafen | |

Titandioxid (Rutiltyp; ®Tronox R-KB-4⁸⁾) wurde bezogen auf den festen Bindemittelanteil (= Summe aus Polyesterpolyol und blockierten Polyisocyanat) im Verhältnis 1:1 zugesetzt und alles zusammen auf der Perlmühle homogenisiert.
⁸⁾Kerr Mc Gee, Leverkusen

Der entstehende Weißlack wurde durch Zusatz von ®Solvesso 200 auf eine Auslaufviskosität im 4 mm-DIN-Becher (DIN 53 211) von ca. 70 Sekunden verdünnt, in einer Nassfilmschichtdicke von ca. 40 - 50 µm auf zuvor grundierte Aluminiumbleche (68 mm x 1590 mm) ®Alodine 1200 (Bleche der Fa. Henkel-Technimetal, Köln) aufgezogen und im Einbrennumluftofen bei 300°C Ofentemperatur (≅ ca. 232 - 241°C mittlere Objekttemperatur) über einen Zeitraum von 55 bis 60 Sekunden eingebrannt und sofort im lauwarmen Wasser abgekühlt. Anschließend wurde die Buchholzhärte (DIN 53 153, *ECCA.T 12), der Glanz nach Gardner im 20°- und 60°-Winkel (DIN 67 530, *ECCA.T 2), der Weißgrad (DIN 6174, *ECCA.T 3), die Lösemittelbeständigkeit mittels MEK-Wischtest (*NCCA-Norm II-15, 2 kg Belastung), die Haftung mittels Gitterschnitt und 6 mm-Tiefung (DIN 53 151, *ECCA.T 6), die Schlagprüfung (DIN 55 669, *ECCA.T 5), die Elastizität (T-bend-Test nach *NCCA-Norm II-19), und die Abriebfestigkeit (DIN 53 754; 500 Zyklen, 500 g Belastung, CS-10 Steine) bestimmt.
*ECCA = European-Coil Coating Association
*NCCA = National-Coil Coating Association (USA)

Es ergeben sich die in Tabelle 2 aufgelisteten Werte

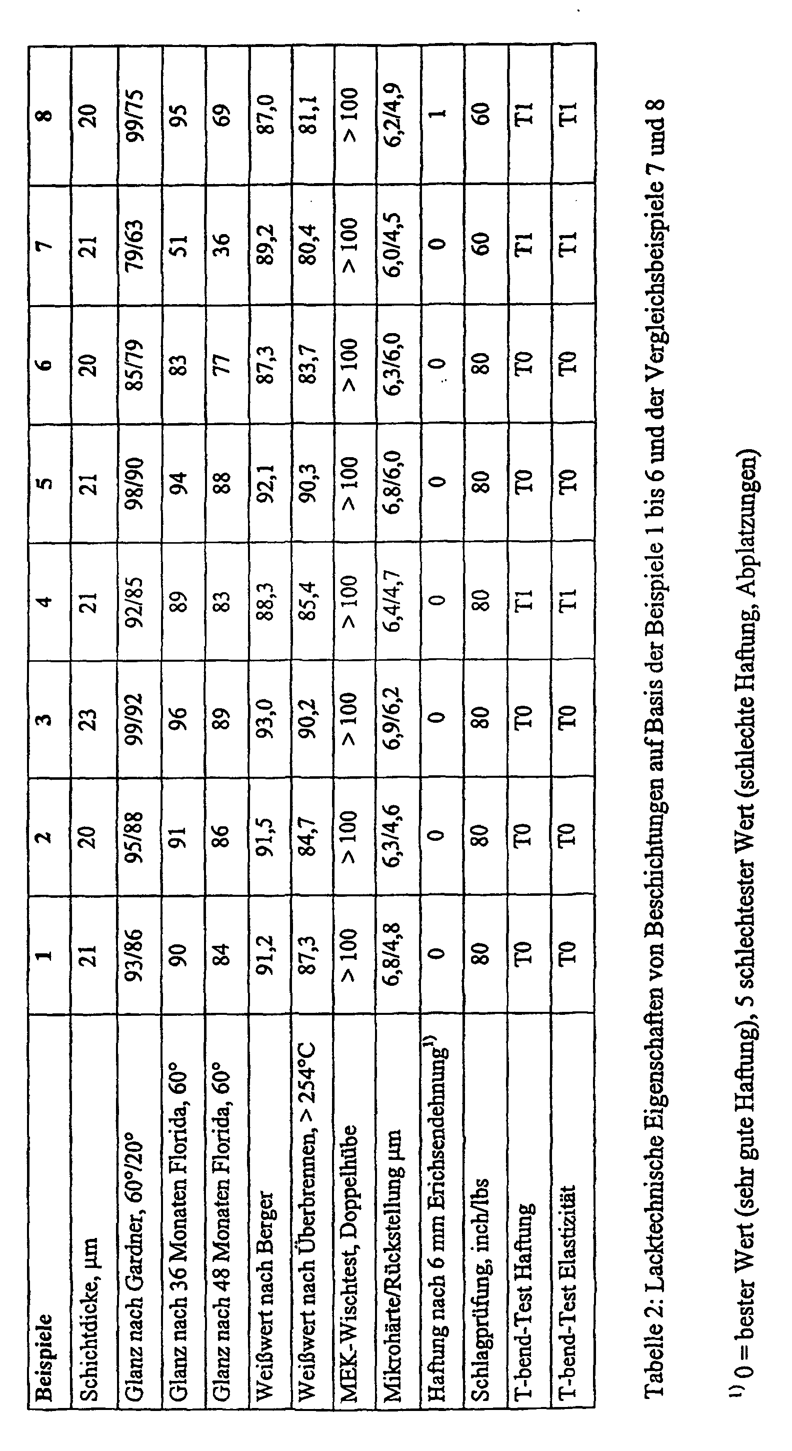

Die Ergebnisse der lacktechnischen Prüfungen gemäß Tabelle 2 zeigen auf, dass mit Lacken auf Basis der Beispiele 1 bis 6 sowie 7 und 8 gut haftende, lösemittelbeständige Beschichtungen unter Coil-Coating-Bedingungen herstellbar sind. Der Ausgangsglanz und der Weißwert, auch nach Überbrennen, ist bei allen Beschichtungen gut bis sehr gut. Die Filmhärten der Beschichtungen liegen auf vergleichbarem Niveau. Bei der Haftung weist die Beschichtung auf Basis des Beispiels 8 leichte Defizite auf. Bei der Schlagprüfung haben die Beschichtungen auf Basis der Beispiele 1 bis 6 Vorteile gegenüber den Beschichtungen auf Basis der Beispiele 7 und 8. Der entscheidende Vorteil der erfindungsgemäßen Beschichtungen auf Basis der Beispiele 1 bis 6 gegenüber den Beschichtungen auf Basis der Beispiele 7 und 8 liegt jedoch in der ganz hervorragenden Außenwitterungsbeständigkeit, untersucht im vierjährigen Florida-Außenbewitterungstest. Dabei wird deutlich aufgezeigt, dass die Beschichtungen auf Basis der erfindungsgemäßen Lacke der Beispiele 1 bis 6 nach vier Jahren Bewitterung nur geringfügige Glanzeinbußen aufweisen, wogegen die Beschichtungen auf Basis der Beispiele 7 und 8 wesentlich deutlichere Glanzeinbußen hinnehmen müssen. Dabei ist auffällig, dass der Glanzverlust der Beschichtung auf Basis des Beispiels 8 nach 36 Monaten Bewitterung noch äußerst gering, jedoch nach 48 Monaten Bewitterung doch beträchtlich hoch ist, im Vergleich zu den erfindungsgemäßen Beschichtungen auf Basis der Lacke gemäß Beispiel 1 bis 6. Weiterhin ist zu erkennen, dass die Beschichtungen auf Basis der Polyester gemäß Beispiel 1 bis 5, die mit einem Zinnkatalysator hergestellt wurden, bessere Glanzwerte aufweisen, als die Beschichtung auf Basis des Polyesters aus Beispiel 6. Diese Ergebnisse waren nicht vorhersehbar und sind völlig überraschend.

## Patentansprüche

1. Bei Raumtemperatur lagerstabile flüssige Beschichtungsmittel, bestehend aus einem Bindemittelgemisch, organischen Lösungsmitteln und gegebenenfalls den aus der Lacktechnologie bekannten üblichen Hilfs- und Zusatzmitteln, wobei das Bindemittel ein Gemisch darstellt aus:
A) 2,0 bis 30 Gew.-%, bezogen auf die Summe der Komponenten A) und B), einer Vernetzerkomponente, bestehend aus mindestens einem Aminoplastharz und/oder mindestens einem blockierten Polyisocyanat, und
B) 98 bis 70 Gew.-%, bezogen auf die Summe der Komponenten A) und B), einer Polyesterkomponente, bestehend aus mindestens einem hydroxyl- und carboxylgruppenhaltigen Polyester, **dadurch gekennzeichnet, dass** die
Komponente B) ein mittleres, zahlengemitteltes Molekulargewicht Mn von 500 bis 10000 g/mol, eine Hydroxylzahl von 20 bis 50 mg KOH/g und eine Säurezahl von 0,5 bis 30 mg KOH/g aufweist und durch Polykondensation von
a) 50,5 bis 53 Mol-% einer Polyolkomponente, bestehend aus
a1) mind. 60 Mol-% Neopentylglykol und/oder 1,4-Cyclohexandimethanol,
a2) 20 bis 30 Mol-% Ethylenglykol, 1,2- und 1,3-Propandiol, 1,3- und 1,4-Butandiol und/oder 1,6-Hexandiol,
a3) 0,1 bis 5 Mol-% Trimethylolpropan, Glycerin und/oder Pentaerythrit,
a4) 0 bis 19,9 Mol-% anderen, von a1) bis a3) verschiedenen Alkoholen
mit
b) 47 bis 49,5 Mol-% einer Polycarbonsäurekomponente, bestehend aus
b1) 55 bis 75 Mol-% Isophthalsäure,
b2) 10 bis 40 Mol-% Terephthalsäure und/oder Phthalsäure bzw. deren Anhydrid,
b3) 0,1 bis 20 Mol-% Adipinsäure und
b4) 0 bis 34,9 Mol-% anderen, von b1) bis b3) verschiedenen Carbonsäuren
hergestellt worden ist,
wobei sich die genannten Prozentangaben bezüglich A) und B), bzw. a) und b), a1) bis a4) und b1) bis b4) jeweils zu 100 ergänzen.

2. Beschichtungsmittel gemäß Anspruch 1, **dadurch gekennzeichnet, dass**
die Komponente B) eine Polyesterkomponente eines mittels Gelpermeationschromatographie ermittelten mittleren zahlengemittelten Molekulargewichtes Mn (Kalibrierung Polystyrol) von 500 bis 10000, bei einer Uneinheitlichkeit U = (Mw/Mn) - 1 von < 5, einer Hydroxylzahl von 20 bis 50 KOH/g, sowie einer Säurezahl von 0,5 bis 30 KOH/g ist, die durch Polykondensation von
a) 50,5 bis 53 Mol-% einer Polyolkomponente, bestehend aus:
a1) mind. 60 Mol-% Neopentylglykol und/oder 1,4-Cyclohexandimethanol,
a2) 20 bis 30 Mol-% Ethylenglykol, 1,2- und 1,3-Propandiol, 1,3- und 1,4-Butandiol und/oder 1,6-Hexandiol,
a3) 0,1 bis 5 Mol-% Trimethylolpropan, Glycerin und/oder Pentaerythrit und
a4) 0 bis 19,9 Mol-% anderen, von a1) bis a3) verschiedenen Alkoholen
mit
b) 47 bis 49,5 Mol-% einer Polycarbonsäurekomponente, bestehend aus
b1) 55 bis 75 Mol-% Isophthalsäure,
b2) 10 bis 40 Mol-% Terephthalsäure und/oder Phthalsäure bzw. deren Anhydrid,
b3) 0,1 bis 20 Mol-% Adipinsäure und
b4) 0 bis 34,9 Mol-% anderen, von b1) bis b3) verschiedenen Carbonsäuren
hergestellt worden ist,
wobei sich die genannten Prozentangaben bezüglich a) und b), a1) bis a4) und b1) bis b4) jeweils zu 100 ergänzen.

3. Beschichtungsmittel gemäß Anspruch 1 und 2, **dadurch gekennzeichnet, dass** die Komponente B) eine Polyesterkomponente eines mittels Gelpermeationschromatographie ermittelten mittleren zahlengemittelten Molekulargewichtes Mn (Kalibrierung Polystyrol) von 1000 bis 8000, bei einer Uneinheitlichkeit U = Mw/Mn - 1 von < 4, einer Hydroxylzahl 25 bis 46 mg KOH/g, sowie einer Säurezahl von 0,5 bis 20 mg KOH/g ist, die durch Polykondensation von
a) 50,5 bis 52,5 Mol-% einer Polyolkomponente, bestehend aus
a1) mind. 62 Mol-% Neopentylglykol und/oder 1,4-Cyclohexandimethanol,
a2) 22 bis 30 Mol-% Ethylenglykol, 1,2- und 1,3-Propandiol, 1,3- und 1,4-Butandiol und/oder 1,6-Hexandiol,
a3) 1 bis 4,5 Mol-% Trimethylolpropan, Glycerin und/oder Pentaerythrit und
a4) 0 bis 15 Mol-% anderen, von a1) bis a3) verschiedenen Alkoholen
mit
b) 47,5 bis 49,5 Mol-% einer Polycarbonsäurekomponente, bestehend aus
b1) 57 bis 73 Mol-% Isophthalsäure,
b2) 12 bis 38 Mol-% Terephthalsäure und/oder Phthalsäure bzw. deren Anhydrid,
b3) 2 bis 18 Mol-% Adipinsäure und
b4) 0 bis 29 Mol-% anderen, von b1) bis b3) verschiedenen Carbonsäuren,
unter Verwendung von titan- und/oder zinnhaltigen Katalysatoren eines Molekulargewichts von 166 bis 300 hergestellt worden ist,
wobei sich die genannten Prozentangaben bezüglich a) und b), a1) bis a4) und b1) bis b4) jeweils zu 100 ergänzen.

4. Beschichtungsmittel gemäß Anspruch 1 bis 3, **dadurch gekennzeichnet, dass**
die Komponente B) eine Polyesterkomponente eines mittels Gelpermeationschromatographie ermittelten mittleren zahlengemittelten Molekulargewichtes Mn (Kalibrierung Polystyrol) von 2000 bis 6000, bei einer Uneinheitlichkeit U = (Mw/Mn) - 1 von < 3, einer Hydroxylzahl von 30 bis 42 mg KOH/g, sowie einer Säurezahl von 0,5 bis 10 mg KOH/g ist, die durch Polykondensation von
a) 50,5 bis 52 Mol-% einer Polyolkomponente, bestehend aus
a1) mind. 64 Mol-% Neopentylglykol und/oder 1,4-Cyclohexandimethanol,
a2) 24 bis 30 Mol-% Ethylenglykol, 1,2- und 1,3-Propandiol, 1,3- und 1,4-Butandiol und/oder 1,6-Hexandiol,
a3) 2 bis 4,5 Mol-% Trimethylolpropan, Glycerin und/oder Pentaerythrit und
a4) 0 bis 10 Mol-% anderen, von a1) bis a3) verschiedenen Alkoholen
mit
b) 48 bis 49,5 Mol-% einer Polycarbonsäurekomponente, bestehend aus
b1) 58 bis 72 Mol-% Isophthalsäure,
b2) 14 bis 36 Mol-% Terephthalsäure und/oder Phthalsäure bzw. deren Anhydrid,
b3) 4 bis 16 Mol-% Adipinsäure und
b4) 0 bis 24 Mol-% anderen, von b1) bis b3) verschiedenen Carbonsäuren,
unter Verwendung von zinnhaltigen Katalysatoren eines Molekulargewichts von 166 bis 300 hergestellt worden ist,
wobei sich die genannten Prozentangaben bezüglich a) und b), a1) bis a4) und b1) bis b4) jeweils zu 100 ergänzen.

5. Beschichtungsmittel gemäß Anspruch 1 bis 4, **dadurch gekennzeichnet, dass** die Komponente B) eine Polyesterkomponente eines mittels Gelpermeationschromatographie ermittelten mittleren zahlengemittelten Molekulargewichtes Mn (Kalibrierung Polystyrol) von 3000 bis 4500 bei einer Uneinheitlichkeit U = (Mw/Mn) - 1 von < 3, einer Hydroxylzahl 30 bis 42 mg KOH/g, sowie einer Säurezahl von 0,5 bis 10 mg KOH/g ist, die durch Polykondensation von
a) 51 bis 52 Mol-% einer Polyolkomponente, bestehend aus
a1) mind 66 Mol-% Neopentylglykol,
a2) 24 bis 28 Mol-% 1,6-Hexandiol,
a3) 2,5 bis 4,5 Mol-% Trimethylolpropan und
a4) 0 bis 7,5 Mol-% anderen, von a1) bis a3) verschiedenen Alkoholen
mit
b) 48 bis 49 Mol-% einer Polycarbonsäurekomponente, bestehend aus
b1) 60 bis 70 Mol-% Isophthalsäure,
b2) 20 bis 30 Mol-% Phthalsäure bzw. deren Anhydrid,
b3) 5 bis 15 Mol-% Adipinsäure und
b4) 0 bis 15 Mol-% anderen, von b1) bis b3) verschiedenen Carbonsäuren,
die unter Verwendung von zinnhaltigen Katalysatoren eines Molekulargewichts von 200 bis 250 hergestellt worden ist,
wobei sich die genannten Prozentangaben bezüglich a) und b), a1) bis a4) und b1) bis b4) jeweils zu 100 ergänzen.

6. Beschichtungsmittel gemäß Anspruch 1 bis 5, **dadurch gekennzeichnet, dass** die Vernetzerkomponente A) ein blockiertes Polyisocyanat ist.

7. Beschichtungsmittel gemäß Anspruch 1 bis 6, **dadurch gekennzeichnet, dass** die Vernetzerkomponente A) ein aliphatisches und/oder cycloaliphatisches blockiertes Polyisocyanat ist.

8. Verwendung der Beschichtungsmittel gemäß Anspruch 1 bis 7 zur Herstellung von unter dem Einfluss von Hitze aushärtbaren Beschichtungen auf beliebigen hitzeresistenten Substraten.

9. Verwendung der Beschichtungsmittel gemäß Anspruch 1 bis 7 zur Herstellung von unter dem Einfluss von Hitze aushärtbaren Beschichtungen auf metallischen Gegenständen im Bandlackierverfahren.

## Claims

1. Liquid coating compositions which are stable to storage at room temperature and comprise a binder mixture, organic solvents and optionally the conventional auxiliary substances and additives known from lacquer technology, where the binder is a mixture of:
A) 2.0 to 30 wt.%, based on the sum of components A) and B), of a crosslinking component comprising at least one aminoplast resin and/or at least one blocked polyisocyanate and
B) 98 to 70 wt.%, based on the sum of components A) and B), of a polyester component comprising at least one polyester containing hydroxyl- and carboxyl groups, **characterized in that**
component B) has an average number-average molecular weight Mn of 500 to 10,000 g/mol, a hydroxyl number of 20 to 50 mg KOH/g and an acid number of 0.5 to 30 mg KOH/g and has been prepared by polycondensation of
a) 50.5 to 53 mol% of a polyol component comprising
a1) at least 60 mol% neopentylglycol and/or 1,4-cyclohexanedimethanol,
a2) 20 to 30 mol% ethylene glycol, 1,2- and 1,3-propanediol, 1,3- and 1,4-butanediol and/or 1,6-hexanediol,
a3) 0.1 to 5 mol% trimethylolpropane, glycerol and/or pentaerythritol,
a4) 0 to 19.9 mol% of other alcohols which differ from a1) to a3)
with
b) 47 to 49.5 mol% of a polycarboxylic acid component comprising
b1) 55 to 75 mol% isophthalic acid,
b2) 10 to 40 mol% terephthalic acid and/or phthalic acid or the anhydride thereof,
b3) 0.1 to 20 mol% adipic acid and
b4) 0 to 34.9 mol% of other carboxylic acids which differ from b1) to b3),
the percentage data stated in respect of A) and B), and a) and b), a1) to a4) and b1) to b4) in each case adding up to 100.

2. Coating compositions according to claim 1,
**characterized in that**
component B) is a polyester component with an average number-average molecular weight Mn determined by means of gel permeation chromatography (polystyrene calibration) of 500 to 10,000 with a heterogeneity H = (Mw/Mn) - 1 of < 5, a hydroxyl number of 20 to 50 mg KOH/g and an acid number of 0.5 to 30 mg KOH/g, which has been prepared by polycondensation of
a) 50.5 to 53 mol% of a polyol component comprising:
a1) at least 60 mol% neopentylglycol and/or 1,4-cyclohexanedimethanol,
a2) 20 to 30 mol% ethylene glycol, 1,2- and 1,3-propanediol, 1,3- and 1,4-butanediol and/or 1,6-hexanediol,
a3) 0.1 to 5 mol% trimethylolpropane, glycerol and/or pentaerythritol and
a4) 0 to 19.9 mol% of other alcohols which differ from a1) to a3)
with
b) 47 to 49.5 mol% of a polycarboxylic acid component comprising
b1) 55 to 75 mol% isophthalic acid,
b2) 10 to 40 mol% terephthalic acid and/or phthalic acid or the anhydride thereof,
b3) 0.1 to 20 mol% adipic acid and
b4) 0 to 34.9 mol% of other carboxylic acids which differ from b1) to b3),
the percentage data stated in respect of a) and b), a1) to a4) and b1) to b4) in each case adding up to 100.

3. Coating compositions according to claim 1 and 2, **characterized in that** component B) is a polyester component with an average number-average molecular weight Mn determined by means of gel permeation chromatography (polystyrene calibration) of 1,000 to 8,000 with a heterogeneity H = Mw/Mn - 1 of < 4, a hydroxyl number of 25 to 46 mg KOH/g and an acid number of 0.5 to 20 mg KOH/g, which has been prepared by polycondensation of
a) 50.5 to 52.5 mol% of a polyol component comprising
a1) at least 62 mol% neopentylglycol and/or 1,4-cyclohexanedimethanol,
a2) 22 to 30 mol% ethylene glycol, 1,2- and 1,3-propanediol, 1,3- and 1,4-butanediol and/or 1,6-hexanediol,
a3) 1 to 4.5 mol% trimethylolpropane, glycerol and/or pentaerythritol and
a4) 0 to 15 mol% of other alcohols which differ from a1) to a3)
with
b) 47.5 to 49.5 mol% of a polycarboxylic acid component comprising
b1) 57 to 73 mol% isophthalic acid,
b2) 12 to 38 mol% terephthalic acid and/or phthalic acid or the anhydride thereof,
b3) 2 to 18 mol% adipic acid and
b4) 0 to 29 mol% of other carboxylic acids which differ from b1) to b3),
using titanium- and/or tin-containing catalysts with a molecular weight of 166 to 300,
the percentage data stated in respect of a) and b), a1) to a4) and b1) to b4) in each case adding up to 100.

4. Coating compositions according to claim 1 to 3,
**characterized in that**
component B) is a polyester component with an average number-average molecular weight Mn determined by means of gel permeation chromatography (polystyrene calibration) of 2,000 to 6,000 with a heterogeneity H = (Mw/Mn) - 1 of < 3, a hydroxyl number of 30 to 42 mg KOH/g and an acid number of 0.5 to 10 mg KOH/g, which has been prepared by polycondensation of
a) 50.5 to 52 mol% of a polyol component comprising
a1) at least 64 mol% neopentylglycol and/or 1,4-cyclohexanedimethanol,
a2) 24 to 30 mol% ethylene glycol, 1,2- and 1,3-propanediol, 1,3- and 1,4-butanediol and/or 1,6-hexanediol,
a3) 2 to 4.5 mol% trimethylolpropane, glycerol and/or pentaerythritol and
a4) 0 to 10 mol% of other alcohols which differ from a1) to a3)
with
b) 48 to 49.5 mol% of a polycarboxylic acid component comprising
b1) 58 to 72 mol% isophthalic acid,
b2) 14 to 36 mol% terephthalic acid and/or phthalic acid or the anhydride thereof,
b3) 4 to 16 mol% adipic acid and
b4) 0 to 24 mol% of other carboxylic acids which differ from b1) to b3),
using tin-containing catalysts with a molecular weight of 166 to 300,
the percentage data stated in respect of a) and b), a1) to a4) and b1) to b4) in each case adding up to 100.

5. Coating compositions according to claim 1 to 4, **characterized in that** component B) is a polyester component with an average number-average molecular weight Mn determined by means of gel permeation chromatography (polystyrene calibration) of 3,000 to 4,500 with a heterogeneity H = (Mw/Mn) - 1 of < 3, a hydroxyl number of 30 to 42 mg KOH/g and an acid number of 0.5 to 10 mg KOH/g, which has been prepared by polycondensation of
a) 51 to 52 mol% of a polyol component comprising
a1) at least 66 mol% neopentylglycol
a2) 24 to 28 mol% 1,6-hexanediol,
a3) 2.5 to 4.5 mol% trimethylolpropane and
a4) 0 to 7.5 mol% of other alcohols which differ from a1) to a3)
with
b) 48 to 49 mol% of a polycarboxylic acid component comprising
b1) 60 to 70 mol% isophthalic acid,
b2) 20 to 30 mol% phthalic acid or the anhydride thereof,
b3) 5 to 15 mol% adipic acid and
b4) 0 to 15 mol% of other carboxylic acids which differ from b1) to b3),
using tin-containing catalysts with a molecular weight of 200 to 250,
the percentage data stated in respect of a) and b), a1) to a4) and b1) to b4) in each case adding up to 100.

6. Coating compositions according to claim 1 to 5, **characterized in that** the crosslinking component A) is a blocked polyisocyanate.

7. Coating compositions according to claim 1 to 6, **characterized in that** the crosslinking component A) is an aliphatic and/or cycloaliphatic blocked polyisocyanate.

8. Use of the coating compositions according to claim 1 to 7 for the production of coatings which can be cured under the influence of heat on any desired heat-resistant substrates.

9. Use of the coating compositions according to claim 1 to 7 for the production of coatings which can be cured under the influence of heat on metallic objects in the coil coating process.

## Revendications

1. Revêtements liquides stables au stockage à température ambiante, constitués d'un mélange de liants, de solvants organiques et, le cas échéant, des auxiliaires et additifs usuels connus dans la technique des laques, où le liant représente un mélange de :
A) 2,0 à 30 % en poids, par rapport à la somme des composants A) et B), d'un composant réticulant, constitué d'au moins une résine aminoplaste et/ou d'au moins un polyisocyanate bloqué, et
B) 98 à 70 % en poids, par rapport à la somme des composants A) et B), d'un composant polyester, constitué d'au moins un polyester contenant des groupes hydroxyle et carboxyle, **caractérisés en ce que**
le composant B) présente un poids moléculaire moyen en nombre Mn de 500 à 10 000 g/mol, un indice hydroxyle de 20 à 50 mg de KOH/g et un indice acide de 0,5 à 30 mg de KOH/g et est préparé par polycondensation de
a) 50,5 à 53 % en moles d'un composant polyol, constitué de
a1) au moins 60 % en moles de néopentyl glycol et/ou 1,4-cyclohexanediméthanol,
a2) 20 à 30 % en moles d'éthylène glycol, 1,2- et 1,3-propanediol, 1,3- et 1,4-butanediol et/ou 1,6-hexanediol,
a3) 0,1 à 5 % en moles de triméthylolpropane, glycérine et/ou pentaérythrite,
a4) 0 à 19,9 % en moles d'autres alcools, différents des a1) à a3)
avec
b) 47 à 49,5 % en moles d'un composant acide polycarboxylique, constitué de
b1) 55 à 75 % en moles d'acide isophtalique,
b2) 10 à 40 % en moles d'acide téréphtalique et/ou d'acide phtalique ou leurs anhydrides,
b3) 0,1 à 20 % en moles d'acide adipique et
b4) 0 à 34,9 % en moles d'autres acides carboxyliques, différents des b1) à b3),
les indications de pourcentage citées concernant A) et B) ou a) et b), a1) à a4) et b1) à b4) devant être respectivement complétées pour faire 100.

2. Revêtements selon la revendication 1, **caractérisés en ce que**
le composant B) est un composant polyester d'un poids moléculaire moyen en nombre Mn, déterminé par chromatographie par perméation de gel (calibrage polystyrène) de 500 à 10 000, pour une hétérogénéité U = (Mw/Mn) - 1 < 5, un indice hydroxyle de 20 à 50 mg de KOH/g et un indice acide de 0,5 à 30 mg de KOH/g et est préparé par polycondensation de
a) 50,5 à 53 % en moles d'un composant polyol, constitué de
a1) au moins 60 % en moles de néopentyl glycol et/ou 1,4-cyclohexanediméthanol,
a2) 20 à 30 % en moles d'éthylène glycol, 1,2- et 1,3-propanediol, 1,3- et 1,4-butanediol et/ou 1,6-hexanediol,
a3) 0,1 à 5 % en moles de triméthylolpropane, glycérine et/ou pentaérythrite,
a4) 0 à 19,9 % en moles d'autres alcools, différents des a1) à a3)
avec
b) 47 à 49,5 % en moles d'un composant acide polycarboxylique, constitué de
b1) 55 à 75 % en moles d'acide isophtalique,
b2) 10 à 40 % en moles d'acide téréphtalique et/ou d'acide phtalique ou leurs anhydrides,
b3) 0,1 à 20 % en moles d'acide adipique et
b4) 0 à 34,9 % en moles d'autres acides carboxyliques, différents des b1) à b3),
les indications de pourcentage citées concernant a) et b), a1) à a4) et b1) à b4) devant être respectivement complétées pour faire 100.

3. Revêtements selon la revendication 1 et 2, **caractérisés en ce que**
le composant B) est un composant polyester d'un poids moléculaire moyen en nombre Mn, déterminé par chromatographie par perméation de gel (calibrage polystyrène) de 1000 à 8000, pour une hétérogénéité U = (Mw/Mn) - 1 < 4, un indice hydroxyle de 25 à 46 mg de KOH/g et un indice acide de 0,5 à 20 mg de KOH/g et est préparé par polycondensation de
a) 50,5 à 52,5 % en moles d'un composant polyol, constitué de
a1) au moins 62 % en moles de néopentyl glycol et/ou 1,4-cyclohexanediméthanol,
a2) 22 à 30 % en moles d'éthylène glycol, 1,2- et 1,3-propanediol, 1,3- et 1,4-butanediol et/ou 1,6-hexanediol,
a3) 1 à 4,5 % en moles de triméthylolpropane, glycérine et/ou pentaérythrite,
a4) 0 à 15 % en moles d'autres alcools, différents des a1) à a3)
avec
b) 47,5 à 49,5 % en moles d'un composant acide polycarboxylique, constitué de
b1) 57 à 73 % en moles d'acide isophtalique,
b2) 12 à 38 % en moles d'acide téréphtalique et/ou d'acide phtalique ou leurs anhydrides,
b3) 2 à 18 % en moles d'acide adipique et
b4) 0 à 29 % en moles d'autres acides carboxyliques, différents des b1) à b3),
en utilisant des catalyseurs contenant du titane et/ou de l'étain, d'un poids moléculaire de 166 à 300,
les indications de pourcentage citées concernant a) et b), a1) à a4) et b1) à b4) devant être respectivement complétées pour faire 100.

4. Revêtements selon la revendication 1 à 3, **caractérisés en ce que**
le composant B) est un composant polyester d'un poids moléculaire moyen en nombre Mn, déterminé par chromatographie par perméation de gel (calibrage polystyrène) de 2000 à 6000, pour une hétérogénéité U = (Mw/Mn) - 1 < 3, un indice hydroxyle de 30 à 42 mg de KOH/g et un indice acide de 0,5 à 10 mg de KOH/g et est préparé par polycondensation de
a) 50,5 à 52 % en moles d'un composant polyol, constitué de
a1) au moins 64 % en moles de néopentyl glycol et/ou 1,4-cyclohexanediméthanol,
a2) 24 à 30 % en moles d'éthylène glycol, 1,2- et 1,3-propanediol, 1,3- et 1,4-butanediol et/ou 1,6-hexanediol,
a3) 2 à 4,5 % en moles de triméthylolpropane, glycérine et/ou pentaérythrite,
a4) 0 à 10 % en moles d'autres alcools, différents des a1) à a3)
avec
b) 48 à 49,5 % en moles d'un composant acide polycarboxylique, constitué de
b1) 58 à 72 % en moles d'acide isophtalique,
b2) 14 à 36 % en moles d'acide téréphtalique et/ou d'acide phtalique ou leurs anhydrides,
b3) 4 à 16 % en moles d'acide adipique et
b4) 0 à 24 % en moles d'autres acides carboxyliques, différents des b1) à b3),
en utilisant des catalyseurs contenant de l'étain, d'un poids moléculaire de 166 à 300,
les indications de pourcentage citées concernant a) et b), a1) à a4) et b1) à b4) devant être respectivement complétées pour faire 100.

5. Revêtements selon la revendication 1 à 4, **caractérisés en ce que**
le composant B) est un composant polyester d'un poids moléculaire moyen en nombre Mn, déterminé par chromatographie par perméation de gel (calibrage polystyrène) de 3000 à 4500, pour une hétérogénéité U = (Mw/Mn) - 1 < 3, un indice hydroxyle de 30 à 42 mg de KOH/g et un indice acide de 0,5 à 10 mg de KOH/g et est préparé par polycondensation de
a) 51 à 52 % en moles d'un composant polyol, constitué de
a1) au moins 66 % en moles de néopentyl glycol,
a2) 24 à 28 % en moles de 1,6-hexanediol,
a3) 2,5 à 4,5 % en moles de triméthylolpropane,
a4) 0 à 7,5 % en moles d'autres alcools, différents des a1) à a3)
avec
b) 48 à 49 % en moles d'un composant acide polycarboxylique, constitué de
b1) 60 à 70 % en moles d'acide isophtalique,
b2) 20 à 30 % en moles d'acide phtalique ou son anhydride,
b3) 5 à 15 % en moles d'acide adipique et
b4) 0 à 15 % en moles d'autres acides carboxyliques, différents des b1) à b3),
en utilisant des catalyseurs contenant de l'étain, d'un poids moléculaire de 200 à 250,
les indications de pourcentage citées concernant a) et b), a1) à a4) et b1) à b4) devant être respectivement complétées pour faire 100.

6. Revêtements selon la revendication 1 à 5, **caractérisés en ce que** le composant réticulant A) est un polyisocyanate bloqué.

7. Revêtements selon les revendications 1 à 6, **caractérisés en ce que** le composant réticulant A) est un polyisocyanate aliphatique et/ou cycloaliphatique bloqué.

8. Utilisation des revêtements selon la revendication 1 à 7, pour la fabrication de revêtements durcissables sous l'action de la chaleur sur des substrats quelconques résistants à la chaleur.

9. Utilisation des revêtements selon la revendication 1 à 7, pour la fabrication de revêtements durcissables sous l'action de la chaleur sur des objets métalliques dans le procédé de laquage en série.
